# EUROPEAN PATENT APPLICATION

(11) **EP 3 628 550 A1**
(43) Date of publication of application: **01.04.2020**
(21) Application number: 18197743.0
(22) Date of filing: 28.09.2018
(51) Int. Cl.: B60S 1/16, H02K 5/10, H02K 7/116, H02K 5/06

(54) **BRUSHLESS WIPER MOTOR**

(71) Applicant: Valeo Autosystemy SP. Z.O.O., 32-050 Skawina (PL)
(72) Inventor: SZYMKOWICZ, Kamil, 32050 SKAWINA (PL)
(74) Representative: Callu-Danseux, Violaine

(57) **Abstract**

The present invention relates to a brushless wiper motor (100) for driving a wiper member. The brushless wiper motor (100) comprises: a motor case (20) in which a stator (25) provided with a plurality of electromagnetic excitation coils; a rotor rotatably provided inside the stator (25); a rotation shaft (35) integral with the rotor; and a gear case (25) in which a speed reduction gear mechanism (36) connecting the rotation shaft (35) and an output shaft (37) of the brushless wiper motor (100) is housed, the gear case (25) being connected to the motor case (20). In an aspect, the gear case (25) and the motor case (20) are made from different materials.

## Description

### TECHNICAL FIELD

The present invention relates to a brushless electric motor which swings a wiper member of a motor vehicle wiper system.

### STATE OF THE ART:

Typically, a windscreen wiper for a window such as the windscreen of a motor vehicle comprises, in particular, a wiper blade which is designed to rub against the window of the vehicle to remove water, dust and the like by driving it outside the field of vision of the driver. The wiper is carried by an arm which is driven by a wiper motor in an angular reciprocal movement.

Such a wiper motor is provided with a motor unit and a gear unit. The motor unit is provided with a stator and a rotor, and the gear unit is typically provided with a reduction gear mechanism comprising a worm and a worm wheel. The motor unit is housed in a motor case and the gear unit is housed in a gear case. Conventionally, the gear case and the motor case are made of the same material, such as aluminium, thereby resulting in increased weight of the wiper motor. Since the wiper motors are mounted on a wide variety of vehicles from kei-car (small-sized vehicle) to large-sized vehicles, the wiper motors are desired to be reduced in weight for improvement of versatility thereof.

Further, the motor unit and the gear unit are coupled with each other via fastening screws such that the heat generated inside the brushless wiper motor can be dissipated outside the brushless wiper motor from the motor unit. However, over long periods of operation, there may be a possibility that a gap is formed between the gear unit and the motor unit. Consequently, sealing performance between them may be decreased due to thermal expansion. Hence, there is a need for improvement in more efficient dissipation of heat generated inside the brushless wiper motor while reducing the weight of the wiper motor.

### SUMMARY OF THE INVENTION

An object of the present invention is to provide a brushless wiper motor having reduced weight compared to conventional brushless wiper motors.

Another object of the present invention is to provide a brushless wiper motor in which the heat generated inside the brushless wiper motor can be efficiently dissipated to outside the brushless wiper motor.

Yet another object of the present invention is to provide a brushless wiper motor, which can be manufactured in less time and less cost compared to existing brushless wiper motors.

In accordance with an embodiment of the present invention, there is provided a brushless wiper motor for driving a wiper member, the brushless wiper motor comprises: a motor case in which a stator provided with a plurality of electromagnetic excitation coils; a rotor rotatably provided inside the stator; a rotation shaft integral with the rotor; a gear case in which a speed reduction gear mechanism connecting the rotation shaft and an output shaft of the brushless wiper motor is housed, the gear case being connected to the motor case; and the gear case and the motor case are made of different materials.

In accordance with an embodiment of the present invention, the gear case is made from aluminium, and the motor case is made from magnesium or a magnesium-containing alloy.

In accordance with another embodiment of the present invention, the gear case and the motor case are made from different magnesium-containing alloys. For instance, the gear case is made from a first magnesium-containing alloy and the motor case is made from a second magnesium-containing alloy which is different from the first magnesium-containing alloy.

In an aspect, the motor case is manufactured using one of: a die casting process, gravity casting process, and a mold casting process.

In accordance with an embodiment of the present invention, the motor case and the gear case may be liquid sealed by applying a liquid seal in a groove of the gear case.

In accordance with another embodiment of the present invention, the motor case and the gear case may be rubber sealed.

In accordance with yet another embodiment of the present invention, the motor case and the gear case are fastened by fastening members such as screws, bolts, nuts, rivets and they like.

Further, as discussed, in an embodiment of the present invention the motor case is made from lightweight materials such as magnesium or magnesium-containing alloy, and the gear case is made from aluminium. The combination of aluminium and magnesium reduces the weight of the brushless wiper motor and thereby the weight of the vehicle is reduced. Weight reduction not only saves energy but also reduces greenhouse gas emissions. Reducing the automotive vehicle weight by a certain amount will also result in improvement of fuel economy.

In addition, magnesium or magnesium containing alloys offers additional advantages compared to aluminium in terms of dimensional tolerance and a draft angle. The draft angle may be defined as the offset of the walls of a manufactured part, for example, motor case, by a slight angle. By manufacturing the motor case from magnesium or magnesium-containing alloys, a motor case having a zero-degree, or substantially zero-degree draft angle may be produced, along with the additional benefit of realizing good dimensional accuracy in said motor case. Thus, further processing steps such as machining can be avoided by manufacturing the motor case from magnesium or a magnesium-containing alloy. This is particularly advantageous in that it saves a considerable amount of time and also avoids the potential danger of fire inherent in machining magnesium components.
However, if the motor case is being made from aluminium, the aluminium die cast motor case thus obtained would require further processing in order to ensure good dimensional accuracy
Therefore, the number of steps of manufacturing the motor case is reduced by manufacturing the motor case using magnesium-containing alloys. Thereby, the manufacturing cost of the motor case can also be reduced.

In addition, as the gear case and the motor case are tightly sealed by both sealing and fastening, no gap is formed between the gear unit and the motor unit at high temperatures. Therefore, heat accumulated in the stator and others can easily come and go between them. That is, heat inside the brushless wiper motor can be easily dissipated without intervention of the gear case. That is, compared with conventional motors, sealing performance between the motor case and the gear case is enhanced in accordance with the present invention.

According to the present invention, since the motor case in which the stator and rotor assembly is fixed and the second case part in which the gear mechanism is housed are formed of different materials having approximately same linear expansion coefficients, heat transferred to the motor case can be directly dissipated from the motor case without intervention of the gear case. Therefore, a brushless wiper motor which has been improved in heat radiation performance while reducing the weight can be realized according to the present invention.

### BRIEF DESCRIPTION OF THE INVENTION

To complete the description and in order to provide for a better understanding of the invention, a set of drawings is provided. Said drawings form an integral part of the description and illustrate an embodiment of the invention, which should not be interpreted as restricting the scope of the invention, but just as example of how the invention can be carried out. The drawings comprise the following features.
Figure 1 shows a perspective view of a brushless wiper motor in accordance with an embodiment of the present invention.
Figure 2a shows unassembled stator and motor case of the brushless wiper motor in accordance with an embodiment of the present invention.
Figure 2b shows assembled stator and motor case of the brushless wiper motor in accordance with an embodiment of the present invention.
Figure 3 shows a sectional view of a brushless wiper motor in accordance with an embodiment of the present invention.
Figure 4 shows an end portion of a gear case of the brushless wiper motor in accordance with an embodiment of the present invention.
Figure 5a shows a portion of sectional view of the motor case coupled to a portion of the sectional view of the gear case by liquid sealing, in accordance with an embodiment of the present invention.
Figure 5b shows a portion of sectional view of the motor case coupled to a portion of the sectional view of the gear case by rubber sealing, in accordance with an embodiment of the present invention.

### DETAILED DESCRIPTION OF THE INVENTION

Hereinafter, embodiments of the present invention will be described with reference to the accompanying drawings.

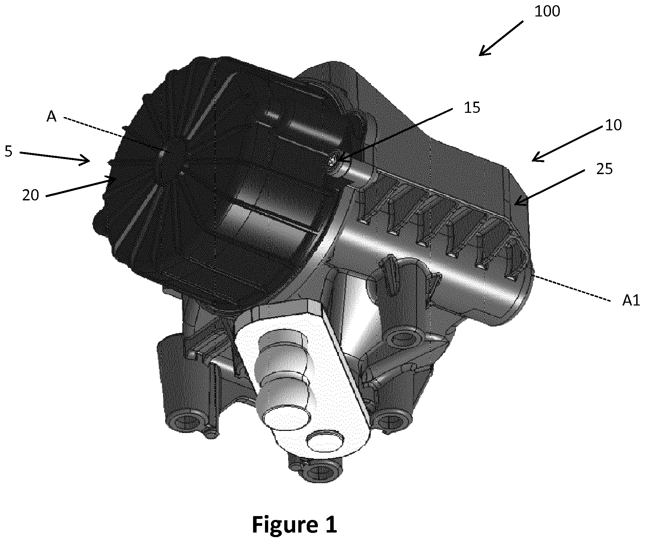

Figure 1 shows a perspective view of a brushless wiper motor 100 in accordance with an embodiment of the present invention. As shown in the Figure 1, the brushless wiper motor 100 is provided with a motor unit 5 and a gear unit 10. The motor unit 5 and the gear unit 10 are coupled to each other by sealing means (not shown in Figure 1) and by fastening means 15, for example, by using a pair of fastening screws. The motor unit 5 is provided with a motor case 20 for housing the motor unit 5, and the gear unit 10 is provided with a gear case 25 for housing the gear unit 10.

According to the present invention, the motor case 20 and the gear case 25 are made of different materials. In an embodiment of the present invention, the motor case 20 is made from magnesium or a magnesium-containing alloy, and the gear case 25 is made from aluminium.

In another embodiment of the present invention, the motor case 20 and the gear case 25 are made from two different magnesium-containing alloys. For instance, the gear case 25 is made from a first magnesium alloy and the motor case 20 is made from a second magnesium alloy which is different from the first magnesium alloy.

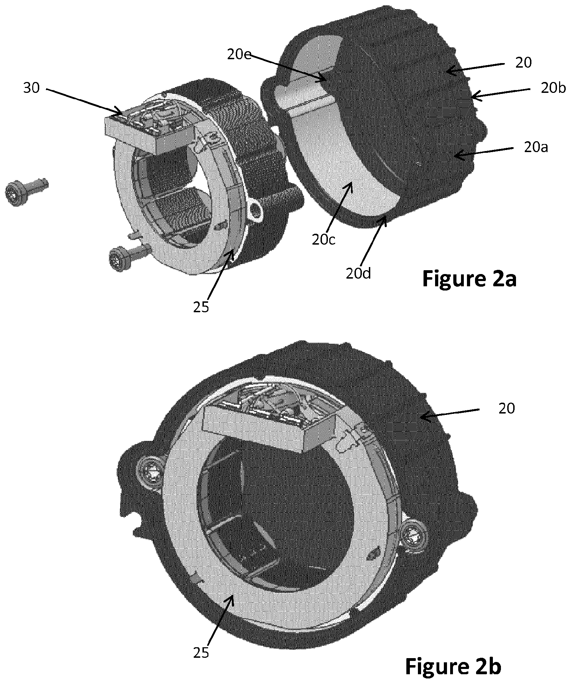

Figure 2a shows unassembled stator and motor case of the brushless wiper motor in accordance with an embodiment of the present invention. Figure 2b shows assembled stator and motor case of the brushless wiper motor in accordance with an embodiment of the present invention. As shown in the Figure 2a and the Figure 2b, the motor case 20 is provided with a cylindrical main body 20a, and one side of the cylindrical main body 20a in an axial direction thereof is closed by a circular portion 20b. On the other hand, an opening portion 20c is provided on other end side of the cylindrical main body 20a in the axial direction, and a flange portion 20d projecting from the cylindrical main body 20a in a radially outward direction is provided around the opening portion 20c. A stator 25 is housed inside the cylindrical main body 20a. The stator 25 is formed into an approximately cylindrical shape by stacking a plurality of steel plates (not shown in detail), and the stator 25 is provided with electromagnetic excitation coils. Further, a motor connecting portion 30 is integrally provided on the stator 25, and the motor connecting portion 30 includes three motor side feeding terminals corresponding to U-phase, V-phase and W-phase of electromagnetic excitation coils.

Further, at least two bosses 20e are provided around the circumferential inner portion of the motor case 20, which serve to axially block the movement of the stator 25. For instance, the bosses 20e are fixed to the circular portion 20b of the cylindrical main body 20a. In an aspect, the bosses 20e are respectively arranged at equal intervals (at intervals of 120 degrees or 180 degrees, for instance) along the circumferential direction of the circular portion 20b.

In an embodiment, the stator 25 is firmly fixed to the inner portion of the cylindrical main body 20a of the motor case 20 by inserting the fastening screws in the bosses 20e such that an outer peripheral portion of the stator is caused to contact with the cylindrical main body 20a without any clearance. Therefore, heat accumulated in the stator 25 is efficiently transferred to the cylindrical main body 20a. In another embodiment, the stator 25 is firmly fixed to the cylindrical main body 20a by a bonding agent of epoxy resin. Further, a rotor (not shown in Figure 2a and Figure 2b) is rotatably provided inside the stator 25 via a predetermined clearance (air gap).

It is to be noted that the present invention is not limited to a brushless wiper motor 100 having an SPM (surface permanent magnets) structure, but a brushless wiper motor 100 having an IPM (interior permanent magnet) structure in which permanent magnets are embedded in the rotor may be adopted. The present invention may also be adapted for conventional brushed motors without significant effort.

In addition, in an embodiment of the present invention, an outer portion of the cylindrical main body 20a of the motor case 20 is provided with ribs to provide higher strength to the motor case 20. Further, by manufacturing the motor case using magnesium or magnesium containing alloys, a draft angle of zero degrees can be achieved such that no clearance is formed between the inner circumferential portion of the cylindrical main body 20a and the stator 25, when the stator 25 is assembled therein.

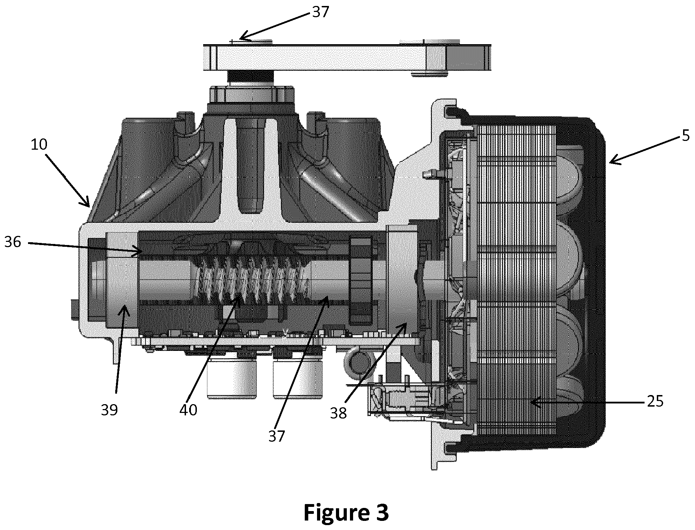

Figure 3 shows a sectional view of a brushless wiper motor 100 taken along line A-A1 in the Figure 1, in accordance with an embodiment of the present invention. As discussed previously, the motor unit 5 and the gear unit 10 are coupled to each other to form the brushless wiper motor assembly 100. The gear unit 10 is provided with a rotation shaft 35 at a rotation centre thereof, and the rotation shaft 35 is fixed at the axial center of the rotor on one side so as to extend through the axial center. On the other side, a worm forming a part of a gear mechanism 36 in cooperation with a worm wheel is provided and the worm is engaged with gear teeth 40 of the worm wheel. That is, the worm is rotated by the rotor, and drives the worm wheel in turn.

The worm wheel and the worm collectively constitute the gear mechanism 36 and form the reduction mechanism for reducing a rotational speed of the rotation shaft 35. The gear mechanism 36 connects the rotation shaft 35 and an output shaft 37 of the brushless wiper motor 100. Further, two or more bearings 38, 39 are disposed respectively at both longitudinal ends of the rotation shaft 35 and the guiding in rotation of the rotation shaft 35 is assured solely by the bearings 38, 39. As discussed, the motor unit 5 is provided with a motor case 20 for housing the motor unit 5, and the gear unit 10 is provided with a gear case 25 for housing the gear unit 10.

Further, in an aspect, a control board (not shown in Figures) for controlling the rotation of the rotary portion is provided on the gear unit 10. The control board includes switching elements such as Field Effect Transistors (FETs) and other electronic components. In addition, the brushless wiper motor 100 includes one or more sensors (not shown in Figures) such as hall sensors to monitor the operation of the brushless wiper motor 100.

Such components tend to generate heat in operation; the metallic composition of the motor case 20 and the gear case 25 will also serve to dissipate this heat.

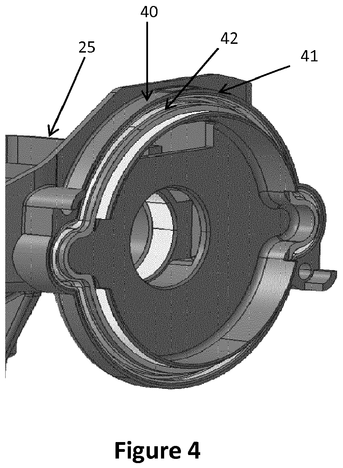

In addition, the gear case 25 includes a circular portion end 40 as shown in the Figure 4. The circular portion end 40 of the gear case is caused to face the opening portion 20c of the motor case 20, and is having a passage through which the rotation shaft 35 is connected to the rotor of the motor unit 5. The circular portion end 40 includes an annular flange portion 41 having groove 42 around its circumference. In an embodiment, the gear case 25 and the motor case 20 may be sealed by applying liquid seal, for instance a room-temperature vulcanizing (RTV) silicone seal, in the groove 43 of the gear case 25 such that the flange portion of the motor case abuts on the groove 43 of the gear case 25. In another embodiment, the gear case 25 and the motor case 20 may be rubber sealed. Although the liquid sealing and the rubber sealing are discussed herein, it is understood to a person skilled in the art that any sealing other mechanism can be used to properly seal the gear case 25 and the motor case 20 without any clearance between them.

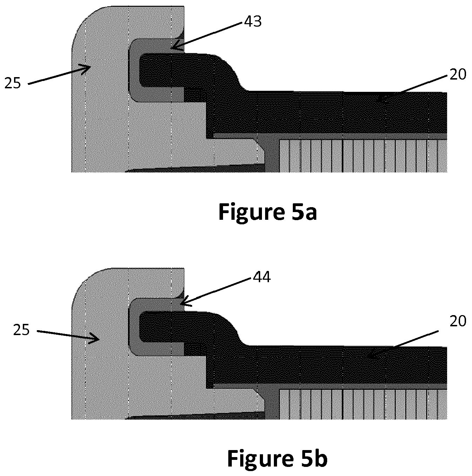

Figure 5a shows a portion of sectional view of the motor case 20 coupled to a portion of the sectional view of the gear case 25 by liquid sealing 43, in accordance with an embodiment of the present invention. Figure 5b shows a portion of sectional view of the motor case 20 coupled to a portion of the sectional view of the gear case 25 by rubber sealing 44, in accordance with an embodiment of the present invention. For the sake of brevity, only portions of sectional views of the motor case 20 and the gear case 25 are shown in the Figure 5a and the Figure 5b.

It is to be noted that the sealing area between the gear case 25 and the motor case 20 is different for liquid sealing 43 and rubber sealing 44. Further, as mentioned previously, the motor case 20and the gear case 25 are coupled to each other by fastening means 15, for example, by using fastening screws (shown in the Figure 1), which reinforces the sealing action and provides mechanical strength to the joint.

As the gear case 25 and the motor case 20 are tightly sealed by sealing and fastening, gap is not formed between the gear unit 10 and the motor unit 5 at high temperatures. Therefore, heat accumulated in the stator and other parts can easily be transferred between them. That is, heat inside the brushless wiper motor 100 can be easily dissipated from the motor unit 5, without intervention of the gear unit 10. That is, compared with conventional motors, sealing performance between the motor case 20 and the gear case 25 is enhanced.

Further, in the present invention, as the gear case 25 is made from aluminium and the motor case 20 is made from magnesium or magnesium containing alloy, the combination of aluminium and magnesium will reduce the weight of the brushless wiper motor 100 and thereby the weight of the vehicle.

In addition, magnesium or magnesium containing alloys offers additional advantages compared to aluminium in terms of dimensional tolerance and a draft angle. The draft angle may be defined as the offset of the walls of the manufactured part, for example, motor case, by a slight angle. By manufacturing the motor case from magnesium or magnesium-containing alloy, a motor case having a draft angle below 2°, and preferably below 0.5°, can be achieved while also achieving good dimensional accuracy
Thus, further processing steps such as machining can be avoided by manufacturing the motor case from magnesium or a magnesium-containing alloy.
However, if the motor case is made from aluminium, the motor case thus obtained requires further processing in order to ensure good dimensional accuracy, notably additional machining steps. Therefore, the number of steps of manufacturing the motor case is reduced by manufacturing the motor case using magnesium-containing alloys. Thereby, the manufacturing cost of the motor case can also be reduced.

A number of possible alloys may ultimately be suitable for a motor and gear case according to the invention. In certain applications, it has been determined that a magnesium-aluminium alloy is particularly advantageous. Such alloys include, but are not limited to, AZ91D, AM50, and AM60. The exact alloy chosen depends on a number of technical and non-technical factors, but in general it is desirable that the thermal conductivity be in the range of 60-75 W/mK at 20° C, and the coefficient of thermal expansion be in the range of 20-30 µm/mK, preferably between 25-26 w/mK, over the range of 20° to 100° C. This will ensure a minimal degree of material shrinkage after solidification (on the order of 0.4-0.6 %).
In addition, since the motor case 20 in which the stator and rotor assembly is fixed and the gear case 25 in which the gear mechanism is housed are formed of different materials having approximately same linear expansion coefficients. Therefore, even if the temperature of the use environment is changed, or heat is generated in the brushless wiper motor due to long period of operation, no gap is formed between the gear case 25 and the motor case 20. Hence, heat transferred to the motor case 20 can be directly dissipated from the motor case 20 without intervention of the gear case 25. Therefore, a brushless wiper motor 100 which has been improved in heat radiation performance while reducing the weight can be realized in accordance with the present invention.

## Claims

1. A brushless wiper motor (100) for driving a wiper member, the brushless wiper motor (100) comprises:
a motor case (20) comprising a stator (25) provided with a plurality of electromagnetic excitation coils;
a rotor rotatably provided inside the stator (25);
a rotation shaft (35) integral with the rotor;
a gear case (25) in which a speed reduction gear mechanism (36) connecting the rotation shaft (35) and an output shaft (37) of the brushless wiper motor (100) is housed, the gear case (25) being connected to the motor case (20);
**characterized in that** the gear case (25) and the motor case (20) are made of different materials.

2. The brushless wiper motor (100) of claim 1, wherein the gear case (25) and the motor case (20) are made of different metallic materials.

3. The brushless wiper motor (100) as claimed in claim 1 or 2, wherein the gear case (25) is made from aluminum.

4. The brushless wiper motor (100) as claimed in any preceding claim, wherein the motor case (20) is made from magnesium or a magnesium-containing alloy.

5. The brushless wiper motor (100) as claimed in claim 4 in conjunction with claim 1 or claim 2, wherein the gear case (25) is made from a first magnesium-containing alloy and the motor case (20) are made from a second magnesium-containing alloy which is different from the first magnesium-containing alloy.

6. The brushless wiper motor (100) according to any preceding claim, wherein the gear case (25) and the motor case (20) are fabricated from a magnesium-aluminium alloy, preferably selected from the group of AZ91D, AM50, AM60.

7. The brushless wiper motor (100) according to any preceding claim, wherein the motor case (20) is manufactured using one of: a die casting process, a gravity casting process, and a mold casting process.

8. The brushless wiper motor (100) according to any preceding claim, wherein a draft angle of at least one wall of the motor case (20) is less than 2 degrees.

9. The brushless wiper motor (100) according to claim 8, wherein the draft angle of at least one wall of the motor case (20) is less than 0.5 degrees.

10. The brushless wiper motor (100) as claimed in any preceding claim, wherein the motor case (20) and the gear case (25) are joined with a liquid seal, for instance a room-temperature-vulcanizing silicone liquid seal.

11. The brushless wiper motor (100) according to claim 10, wherein the liquid seal is applied to a groove (42) provided in the gear case (25).

12. The brushless wiper motor (100) according to any one of claims 1 to 9, wherein the motor case (20) and the gear case (25) are rubber sealed.

13. The brushless wiper motor (100) according to any preceding claim, wherein the motor case (20) and the gear case (25) are fastened together by a fastening member.
